# FASCICULE DE BREVET EUROPEEN

(11) **EP 1 877 328 B1**
(45) Date de publication et mention de la délivrance du brevet: **05.11.2008**
(21) Numéro de dépôt: 06726149.5
(22) Date de dépôt: 30.03.2006
(51) Int. Cl.: B65G 15/24

(54) **DISPOSITIF DE CONVOYAGE DE CHARGES ISOLEES**
VORRICHTUNG ZUR BEFÖRDERUNG VON ISOLIERTEN LASTEN
DEVICE FOR CONVEYING ISOLATED LOADS

(30) Priorité: 30.03.2005 FR 0503079
(43) Date de publication de la demande: 16.01.2008
(73) Titulaire: Neolution, 69530 Brignais (FR)
(72) Inventeur: VIOLLE, Philippe, 13510 Eguilles (FR)
(74) Mandataire: Jeannet, Olivier
(86) Numéro de dépôt international: PCT/FR2006/000686
(87) Numéro de publication internationale: WO 2006/103348

(56) Documents cités:
- US-A- 1 603 634
- US-A- 5 096 045
- US-A- 5 662 209
- US-A1- 2004 089 522
- PATENT ABSTRACTS OF JAPAN vol. 006, no. 232 (M-172), 18 novembre 1982 (1982-11-18) & JP 57 131609 A (NISSAN JIDOSHA KK), 14 août 1982 (1982-08-14)

## Description

La présente invention concerne un dispositif de convoyage de charges isolées comprenant un ensemble de modules de convoyage, portables et articulés entre eux de sorte à former un chemin multidirectionnel pour le transport et l'accumulation de charges isolées (voir par exemple le document US-A-5662209).

Il concerne le domaine industriel de la fabrication de matériel pour la manutention continue (mécanisée) de charges isolées (colis, bacs, cartons, fardeaux ou tout autres types de charges unitaires). Il est destiné à équiper toutes installations de traitement de flux de marchandises (entrepôts, centres de tri, usines, centres logistiques, gare de fret, etc.).

Actuellement, les équipements utilisés pour le convoyage de flux dans de telles installations sont des appareils dédiés à une fonction, dimensionnés pour convenir à une forme de circuit (exemple : une partie droite n'est pas configurable en une partie courbe, une partie plane ne peut pas accepter d'inflexion, etc.).

La conception de ces appareils a été épurée au maximum pour réduire les coûts, et ce au détriment de leur polyvalence.

Il existe des tapis transporteurs droits, des tapis transporteurs courbes, d'autres éléments élévateurs, d'autres éléments qui sont descendeurs, etc. et leur ossature mécanique ne leur permet pas intrinsèquement de changer de fonction.

Généralement, l'industriel ou le logisticien qui investi dans l'acquisition d'un circuit de manutention automatisé doit en modifier la forme à court ou moyen terme, car l'application d'origine évolue très vite. Des tronçons de convoyeurs doivent alors être modifiés pour être réutilisés dans une configuration différente, ce qui entraîne des coûts supplémentaires et des problèmes techniques potentiels ainsi que des délais de mise en oeuvre. Bien souvent, de nouveaux équipements doivent être acquis pour compléter les équipements réutilisés.

Si un nouveau besoin de manutention soudain et/ou éphémère survient, les utilisateurs devront s'en accommoder avec les moyens dont ils disposent; ce qui se traduit généralement par une manutention manuelle ou avec des moyens inadaptés, impliquant une baisse importante de la productivité et une dégradation des conditions de travail.

Ce phénomène est devenu moins acceptable depuis quelques temps, où plusieurs nouveaux facteurs sont apparus :
- les contraintes marketing des entreprises utilisatrices impliquent une plus grande variété de conditionnement des produits (promotions commerciales, nombreux et différents formats d'emballage, changement fréquents des conditionnements...) ;
- les fonctions logistiques (réception, stockage, préparation de commande, expédition) mais également d'emballage et de fabrication (co-packing, co-manufacturing) sont de plus en plus sous-traitées par les entreprises utilisatrices à des fournisseurs de prestations extérieures. Ces derniers doivent donc parfois traiter des flux de marchandises pour plusieurs clients utilisateurs différents. Les équipements de manutention continue doivent, dans ce cas également, pouvoir traiter des produits de dimensions très variées ;
- la durée de vie des produits et des réseaux de distribution diminue, ce qui impose une modification fréquente des structures logistiques ;
- la diminution des stocks entraîne une tension des flux : il est opportun de pouvoir ajouter ou déplacer très rapidement des équipements de manutention permettant de faciliter, d'accélérer ou de rendre moins pénibles le traitement des flux.

Ceci entraîne une demande des utilisateurs en moyens de manutention mécanisés universels et flexibles.

D'où l'intérêt de cumuler différentes fonctions avec un même équipement :
- être configurable en parties droites ET courbes ET/OU inclinées
- transporter ET accumuler,
- s'adapter à des hauteurs de travail très variables,
et de compléter ces nouvelles exigences par :
- un déploiement rapide lorsqu'un besoin spécifique se présente,
- une facilité réelle de mise en oeuvre,
- une mise en oeuvre directe par l'utilisateur sans recours à des prestations spécialisée (montage mécanique, câblage électrique, automatisme,...), généralement sous-traitées.

Le dispositif selon la présente invention a pour objectif de remédier à cet état de choses.

Selon un aspect de l'invention, chacun des modules de convoyage se compose d'un châssis, d'un convoyeur de manutention continue, de moyens et de réglage en hauteur et en inclinaison, et de moyens et de liaison mécanique et électrique permettant une liaison entre les différents modules de manière à former un cheminement pouvant faire suivre aux charges transportées des trajectoires droites et/ou courbe avec des inclinaisons réglables.

Selon un autre aspect de l'invention, le dispositif de convoyage de charges isolées comprend un chariot de support des modules de convoyage et/ou d'alimentation électrique de ceux-ci.

Selon un autre aspect de l'invention, chaque module de convoyage est équipé d'un moyen de transfert entre modules des charges à transporter suivant une trajectoire courbe.

Selon un autre aspect de l'invention, chaque module de convoyage est équipé d'un moyen (5, 7) de guidage des charges à transporter.

Selon un autre aspect de l'invention, le moyen de réglage en hauteur et en inclinaison est réalisé au moyen d'un système de bipieds télescopiques et escamotables, comportant chacun un moyen de blocage angulaire et en hauteur dudit bipied.

Selon un autre aspect de l'invention, le moyen de blocage angulaire et en hauteur de chaque bipied est réalisé grâce à la combinaison, d'une part, d'une poignée excentrique, de quatre bagues dentées, d'un tirant horizontal, agencés de façon à bloquer angulairement les bipieds par rapport au châssis, et, d'autre part, de deux cônes de commandes, de deux tirants verticaux, de quatre montants verticaux et, de deux ressorts annulaires, agencés de façon à bloquer le mouvement de réglage en hauteur des bipieds.

Selon un autre aspect de l'invention, le moyen de réglage supplémentaire en hauteur et en inclinaison est du type à simple ciseau.

Selon un autre aspect de l'invention, le moyen permettant une liaison mécanique entre les différents modules comprend des moyens à allongement télescopique et à liaison à rotule, agencés de façon à pouvoir former entre les modules de convoyage un angle variable sur plusieurs plans.

Selon un autre aspect de l'invention, les moyens à allongement télescopique sont ajustables sans outil, par une rotation de 90° de la rotule ou de la chape autour de leurs axes.

Selon un autre aspect de l'invention, le moyen de transfert entre modules des charges à transporter comprend un rouleau conique, motorisé grâce à un contre galet en appui sur la partie tournante du convoyeur, ledit rouleau conique étant mis en oeuvre de façon à faire suivre aux produits à transporter une trajectoire courbe et étant monté sur un support télescopique permettant de s'adapter aux différentes longueurs d'entrefer induites par la configuration de l'installation : partie droite vers autre partie droite, partie droite vers partie courbe, partie courbe vers partie courbe.

Selon un autre aspect de l'invention, le moyen de guidage des charges à transporter comprend des rives de guidage, constituées d'un tube déformable en matière plastique ou autre, fixé sur un support mécanique ou magnétique, et agencé de façon à éviter aux produits transportés de tomber à terre.

Selon un autre aspect de l'invention, les moyens et de liaison mécanique et électrique sont montés sur des convoyeurs de manière à pouvoir retransmettre les signaux d'informations ainsi que la puissance électrique nécessaire à la connexion d'un autre module de convoyage situé après un convoyeur classique, de façon à pouvoir insérer des convoyeurs classiques au sein d'un circuit constitué de modules de convoyage objets de la présente invention.

Selon un autre aspect de l'invention, chaque module de convoyage est conçu pour être portable et se mettre en place sans outil, par une personne seule.

Le dispositif selon l'invention permet entre autres choses de mettre en oeuvre rapidement, facilement et directement par l'utilisateur, un ensemble de modules de convoyage motorisés et portables, permettant de transporter et/ou d'accumuler un flux de charges isolées, en formant, selon le cheminement choisi, des parties soit droites, soit courbes, soit montantes, soit horizontales, soit descendantes, ou une combinaison de ces dernières.

Le raccordement mécanique et électrique des différents modules de convoyage s'effectue rapidement et sans outil. L'ensemble des actions nécessaires pour configurer ou re-configurer le réseau de convoyeurs portables est réalisable par une seule personne, homme comme femme.

La légèreté et la facilité d'emploi de chacun des modules de convoyage permettent à l'utilisateur d'employer l'équipement sans retenue et aussi fréquemment que possible, ce qui, d'une part augmente la productivité quotidienne des centres de production et, d'autre part diminue la fatigue liée à la manutention manuelle et ponctuelle des charges unitaires.

Par ailleurs, l'objet de la présente invention peut couvrir un large champ d'applications, contrairement aux convoyeurs connus jusqu'à ce jour. Avec le même dispositif, la possibilité est donnée de modifier instantanément la forme d'un réseau de convoyage en cas de panne de machine de production par exemple, de rajouter soudainement un poste de travail, de charger et décharger des véhicules roulants (camions, wagons, ....), de transporter des flux à un étage supérieur ou inférieur (plateforme, sous-sol,...),... Bien d'autres applications sont possibles.

Le dispositif objet de l'invention peut également donner un caractère évolutif et configurable à tous les réseaux de convoyage. Il est en effet possible de modifier profondément le cheminement du réseau de convoyage sans recours à des prestataires spécialisés (monteurs mécaniciens, câbleurs électriques, informaticiens,...), ce qui n'est pas le cas avec les convoyeurs de technologie existante.

Les modules de convoyage peuvent se connecter mécaniquement et électriquement à des convoyeurs de technologie traditionnelle qui doivent être équipés d'interfaces compatibles. Le convoyeur traditionnel sert alors de transmetteur de puissance électrique et de signaux de commande au module de convoyage suivant. L'intérêt est de pouvoir mixer sur un circuit de convoyage les tronçons destinés à ne pas évoluer structurellement (utilisant des convoyeurs de technologie traditionnelle) et ceux qui sont amenés à de fréquents changements (utilisant des modules de convoyage objet de la présente invention).

L'utilisation de l'objet de l'invention peut donc être généralisée à un grand nombre d'applications de convoyage de charges isolées.

Un jeu de cellules photoélectriques et de cartes électroniques de commande, embarquées sur le convoyeur, peut permettre au système un fonctionnement d'accumulation sans pression, c'est-à-dire que les différents convoyeurs sont commandés selon l'état d'occupation du convoyeur suivant. Grâce à ce type de fonctionnement, les différentes charges isolées ne rentrent pas en contact les unes des autres, évitant ainsi les risques de dégradation ou de chute à terre. Cette fonction peut être occultée pour un convoyage classique (sans accumulation) par simple reconfiguration des cavaliers de la carte de commande.

Un chariot de support et d'alimentation électrique complète le dispositif objet de l'invention. L'alimentation électrique équipant le chariot est amovible et peut être amenée seule à proximité de l'un des quelconques convoyeurs portables lorsque des contraintes d'encombrement ne permettent pas l'accès du chariot.

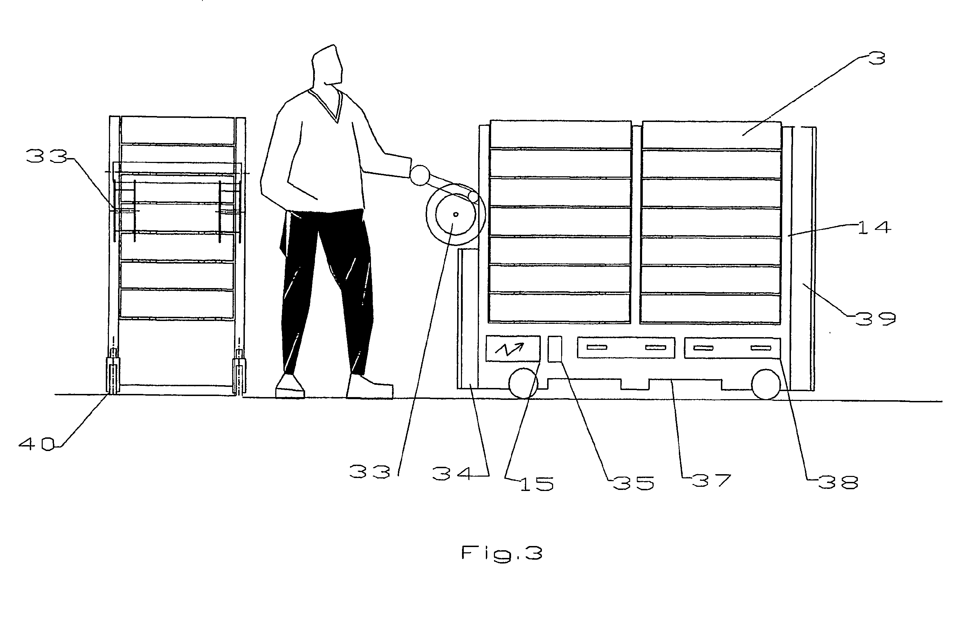

En outre, le chariot d'alimentation permet le stockage optimisé de 1 à 20 modules de convoyage lorsque ces derniers ne sont pas utilisés (figure 3) ainsi que leur transport jusqu'au lieu d'utilisation.

Le cheminement de l'énergie électrique 24Vcc s'effectue de convoyeur en convoyeur grâce à une connexion électrique à chaque extrémité des modules de convoyage.

Dans des applications particulières en extérieur, les modules de convoyage peuvent s'empiler dans un véhicule roulant pour être transportés jusqu'au point de chargement ou déchargement du véhicule. L'alimentation électrique basse tension nécessaire aux modules de convoyage peut alors être fournie par la batterie du véhicule roulant.

### Description technique

### Terminologie :

Dans tout ce qui suit, le terme "module de convoyage" désigne un module complet comprenant différents sous-ensembles comme le châssis (1), le convoyeur (36) ...

Le terme "convoyeur" sera utilisé pour désigner le sous-ensemble du "module de convoyage" exclusivement consacré à la fonction de convoyage.

Sur les dessins annexés, donnés à titre d'exemple non limitatif d'une des formes de réalisation de l'objet de l'invention
- la figure 1 représente une vue en perspective du dispositif selon la présente invention permettant de réaliser différentes formes de circuit de convoyage. Les modules de convoyage (3) sont représentés stockés sur le chariot 14 (repère I), en position d'attente d'utilisation (repère II), et en position dépliée d'utilisation (repère III) ;
- la figure 2 représente une vue en perspective - ainsi que trois vues en deux dimensions - d'une première forme de réalisation du dispositif selon la présente invention, représentant un module de convoyage (3) ;
- la figure 3 représente une vue de coté schématique du chariot d'alimentation électrique ;
- les figures 4 et 5 représentent une des formes de réalisation du dispositif de liaison mécanique entre deux convoyeurs portables. La figure 4 est une vue de dessous de deux modules de convoyage (3). Le détail A montre la liaison mécanique grâce au système rotule et chape.
   La figure 5 montre plus précisément ce dispositif isolé : le détail C montre le système de télescopie, identique pour le système male (rotule 42) et femelle (chape 43). Les détails D et E représentent une vue agrandie de la rotule (42) et de la chape (43) ;
- les figures 6 et 7 représentent une des formes de réalisation de support mécanique ou magnétique de rive de guidage ;
- la figure 8 représente une des formes de réalisation du dispositif à rouleau conique 6 de transfert des charges isolées entre deux convoyeurs portables ;
- la figure 9 représente une des formes de réalisation du système de blocage en rotation des pieds télescopiques ;
- la figure 10 est une vue en coupe partielle du bipieds télescopique (coté poignée) ;
- la figure 11 est une vue en coupe partielle du bipieds télescopique (coté opposé à la poignée) ;
- la figure 12 est une vue en coupe partielle du système de blocage en hauteur des bipieds télescopiques ;
- la figure 13 représente une des formes de réalisation d'un module de convoyage à rouleaux motorisés.

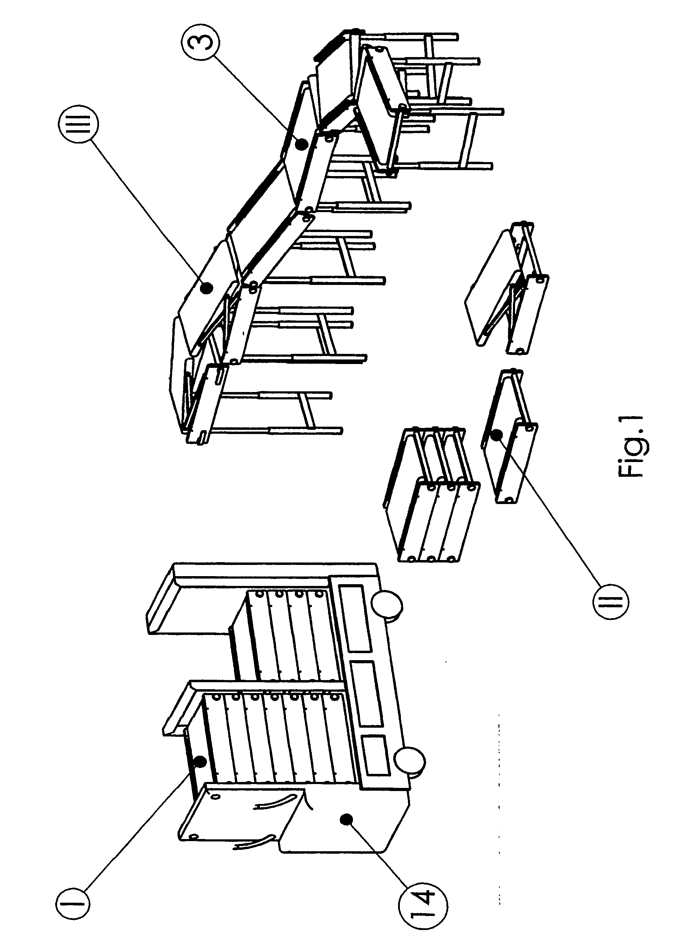

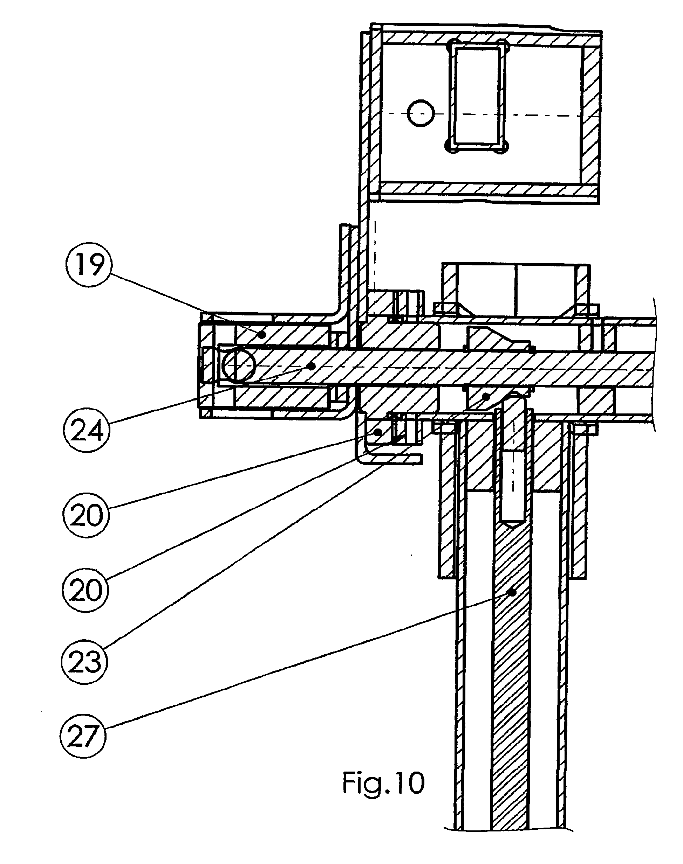

Le dispositif de convoyage de charges isolées selon la présente invention (figures 1 à 13) est constitué d'un ensemble de modules de convoyage (3) et d'un chariot (14) de support et d'alimentation électrique, ledit dispositif étant destiné à équiper toutes installations de traitement de flux de marchandises (entrepôts, centres de tri, usines, centres logistiques, gare de fret, etc.).

Chacun des modules de convoyage (3) se compose d'un châssis (1), d'un convoyeur de manutention continue, de moyens (18) et (2) de réglage en hauteur et en inclinaison, de moyens (8) et (13) de liaison mécanique et électrique de façon à permettre une liaison démontable entre les différents modules de sorte à former un cheminement pouvant faire suivre aux charges transportées des trajectoires droites et/ou courbes avec des inclinaisons réglables permettant ainsi le changement d'altitude, d'un moyen (6) de transfert de la charge à transporter entre les modules de convoyage et d'un moyen (5, 7) de guidage de la charge à transporter

Le réglage en hauteur et en inclinaison de chaque module de convoyage (3) sera de préférence réalisé au moyen d'un système de bipieds télescopiques escamotables (18).

Les deux bipieds télescopiques (18) peuvent être escamotés complètement (en position horizontale, ils sont complètement intégrés dans le châssis (1)), ou, grâce à un mouvement de rotation permis par le déblocage de la poignée excentrique (19), être orientés verticalement ou dans une position angulaire intermédiaire entre la position horizontale et verticale.

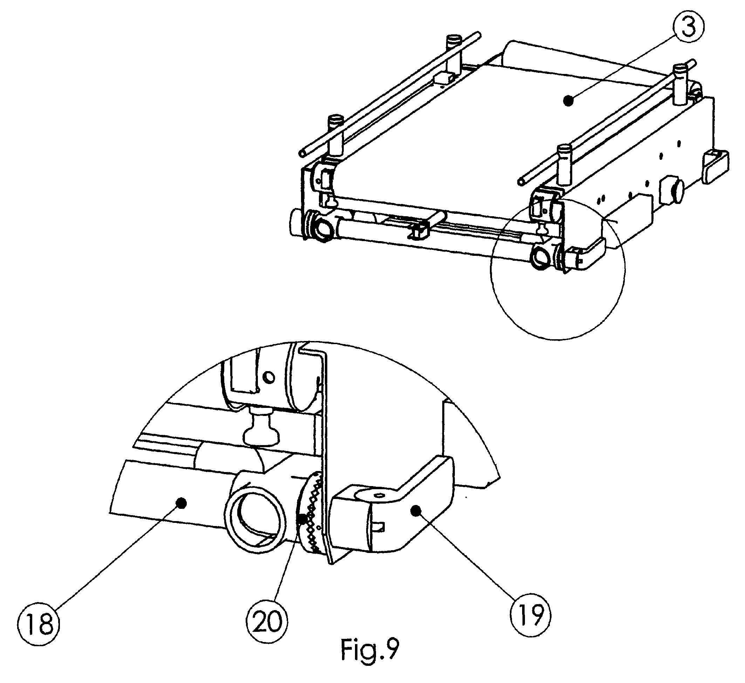

L'arrêt en rotation des bipieds (18) est effectué grâce à des bagues dentées (20) qui sont maintenues en prise par la poignée (19) (figures 9, 10 et 11): le mouvement de rotation de la poignée (19) est transformé en mouvement de translation par la forme excentrique de ladite poignée (19) et transmis au tirant horizontal (24). Les cônes de commande (23), fixés sur le tirant horizontal (24), transmettent ce mouvement aux tirants verticaux (27). Le matériau utilisé pour les cônes de commande (23) présente une bonne résistance au frottement (POM, PA,...) de façon à permettre le glissement de l'extrémité des tirants verticaux sur les cônes de commandes (23) lors de la rotation des bipieds (18).

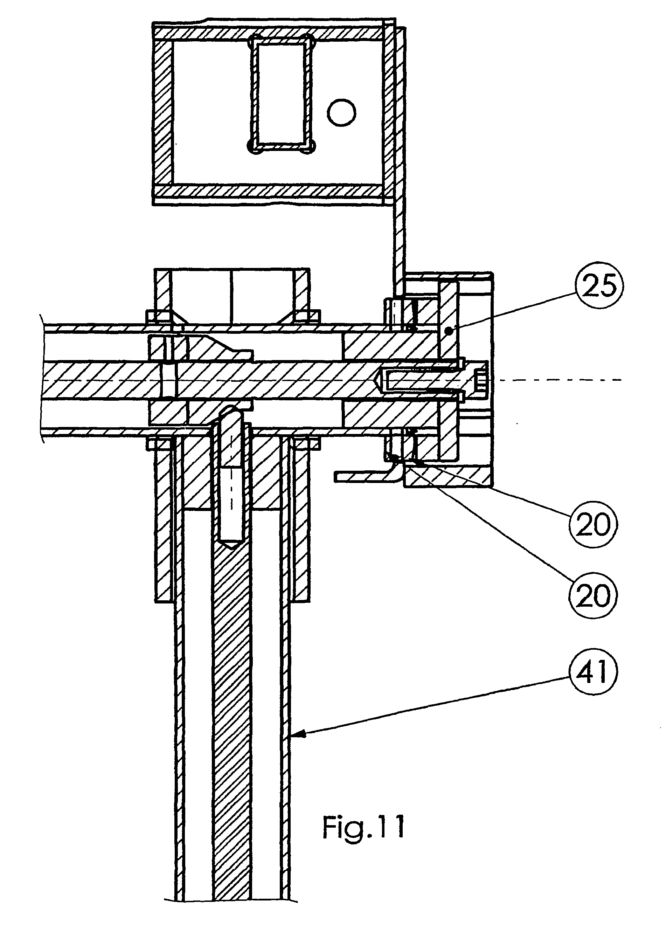

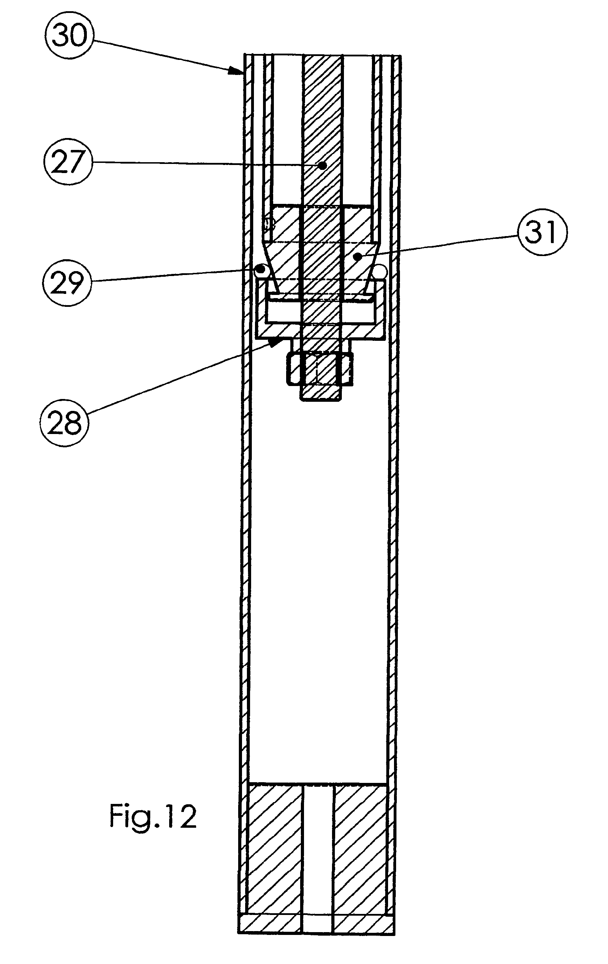

La longueur de chacun des deux bipieds (18) (agissant directement sur la hauteur du module de convoyage (3)) est réglable grâce à un dispositif de glissière tubulaire : les montants verticaux males (41) coulissent dans les montants verticaux femelles (Figure 11 et 12). Le blocage en position est effectué par le coincement d'un ressort annulaire (29) entre le guide ressort conique (31) et le montant vertical femelle (30) (figure 12). Lors de l'ouverture de la poignée (19), le tirant vertical (27) descend et décoince le ressort (29), libérant ainsi le mouvement de télescopie de la glissière (30, 41). De la sorte, l'ouverture de la poignée (19) provoque simultanément le déblocage du bipied (18) en rotation et en télescopie.

Inversement, sa fermeture maintient le bipied (18) dans une position angulaire et une hauteur donnée.

L'action directe sur les deux poignées (19) permet de régler la hauteur et l'inclinaison du convoyeur portable, sans outil.

L'angle d'inclinaison maximum permis par la différence de hauteur des bipieds (18) est de 20° et la hauteur maximum de la surface de transport des charges peut être de 1200 mm par rapport au sol.

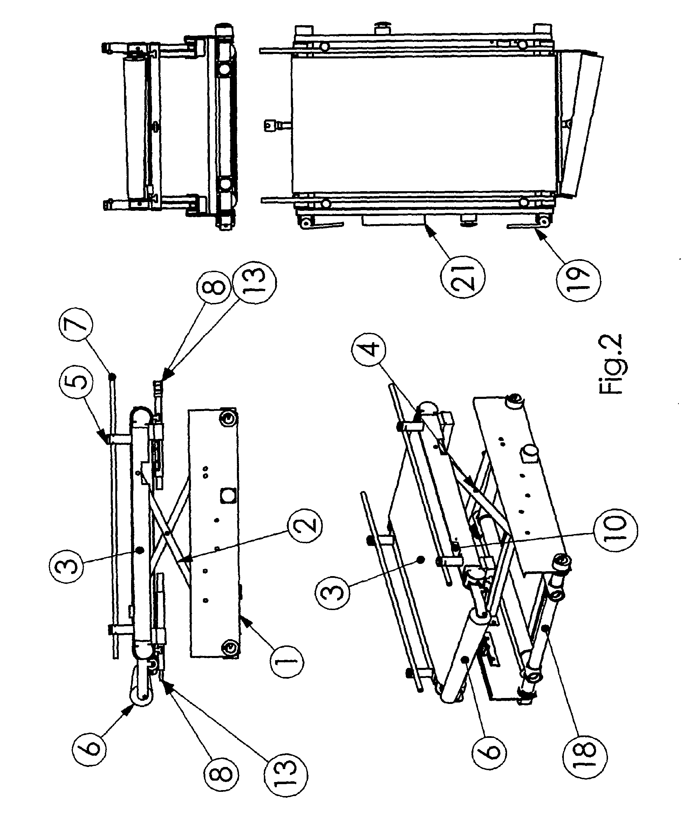

Ce dispositif peut être complété par un système d'élévation (2) qui permet d'augmenter la course de réglage en hauteur et en inclinaison par élévation du convoyeur par rapport au châssis (1). Le système d'élévation (2) est de préférence du type à simple ciseau (figure 2). De la sorte, l'angle maximum d'inclinaison peut être de 25° et l'élévation supplémentaire en hauteur d'environ 300 mm. De la sorte, la hauteur maximum de la surface de transport des charges peut atteindre 1500 mm par rapport au sol.

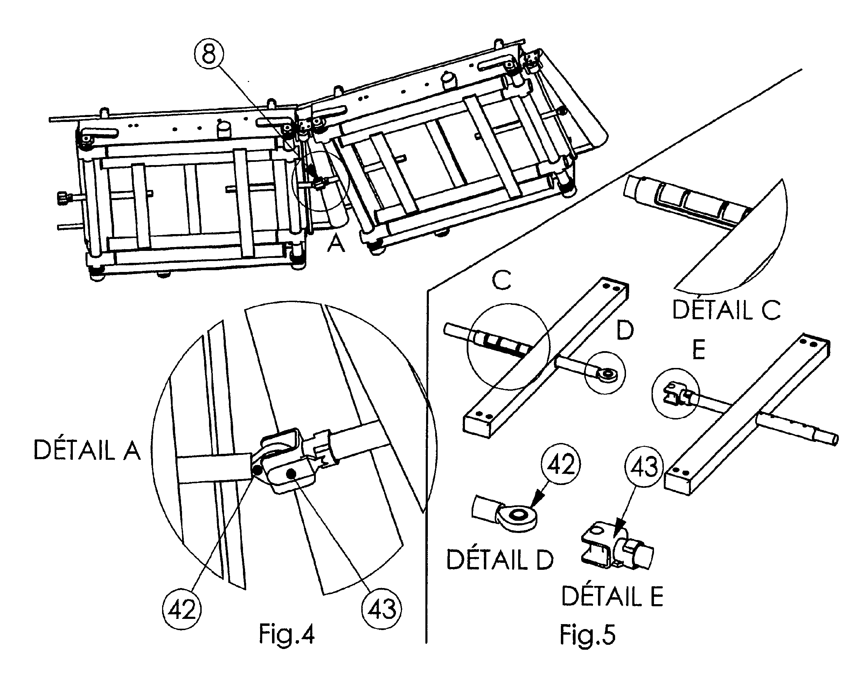

Le module de convoyage (3) comporte un moyen de liaison mécanique (8) et un moyen de connexion électrique (13) à chacune de ses extrémités afin de pouvoir se lier mécaniquement et électriquement au module précédent et/ou suivant. De préférence, le moyen de liaison mécanique (8) sera du type télescopique à rotule (figures 4 et 5) de façon à pouvoir former entre les modules de convoyage un angle variable sur plusieurs plans. Ceci est réalisé de façon à permettre à l'ensemble de présenter un cheminement selon une trajectoire multidirectionnelle (droite et/ou courbe, dans des inclinaisons différentes) du flux des produits à transporter (figure 1).

Le dispositif de liaison mécanique (8) est constitué d'une partie male, la rotule (42) (figure 5, détail D) et d'une partie femelle, la chape (43) (figure 5, détail E).

Chacune de ces parties est télescopique de façon à s'adapter aux différents intervalles induits par la configuration de l'installation : partie droite vers autre partie droite, partie droite vers sur partie courbe, partie courbe vers partie courbe.

Le réglage de la télescopie s'effectue par une rotation de 90° de la chape (43) ou de la rotule (42) autour de son axe (figure 5, détail C). Un ressort de torsion peut être utilisé pour le retour en position initiale. Le maintien en position de la rotule et la chape est effectué grâce à un tourillon du commerce (figure 5, détail E).

De préférence, le moyen de liaison électrique sera un connecteur électrique du commerce, assurant la transmission des signaux de commande (photocellule et informations de commande) et de l'alimentation de puissance (24Vcc). Ce connecteur peut se situer sous le dispositif télescopique (8) de sorte à concentrer sur une même zone l'intervention de l'utilisateur effectuant la liaison de deux modules.

Le châssis (1) est de préférence conçu pour permettre aux modules de convoyage (3) de s'empiler les uns sur les autres lorsqu'ils ne sont plus utilisés (figure 1).

Le convoyeur de manutention continue est de technologie connue : à rouleaux commandés par rouleaux moteurs, par tapis à mailles plastiques ou par bande transporteuse en matière plastique ou caoutchouc.

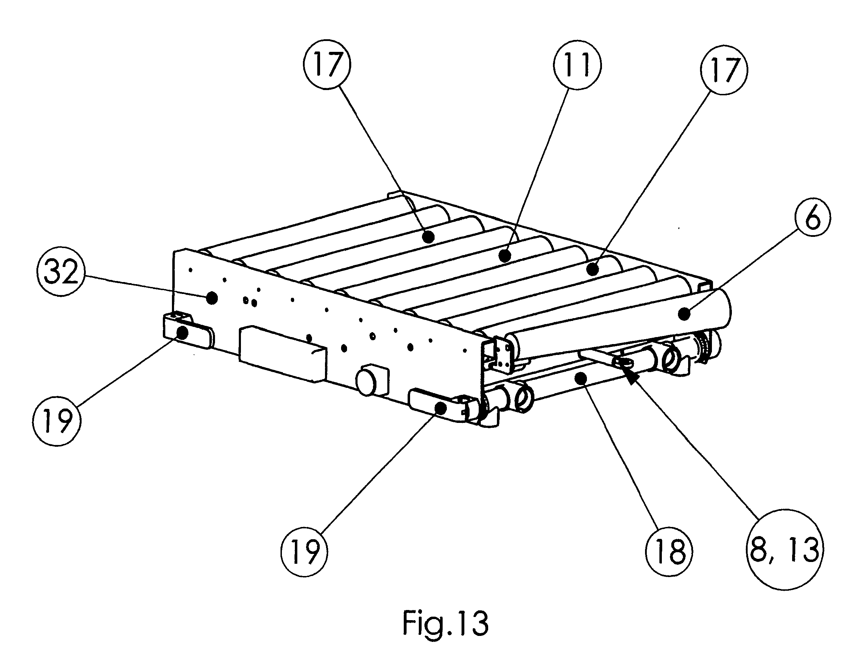

Dans le cas du convoyeur à rouleaux commandés (figure 13), ce dernier est de préférence constitué par une ossature (32), d'un ensemble de rouleaux libres (11) à gorges, commandés par des rouleaux à moteur électrique intégrés (17) (communément appelé "rouleaux moteurs"), et ceci par l'intermédiaire de courroies rondes en polyuréthane disposées en relais entre les rouleaux.

Le moyen de transfert (6) de la charge à transporter entre modules peut être du type rouleau conique. L'effet de la conicité du rouleau permet le transport des charges suivant une trajectoire courbe. Quelle que soit la technologie de convoyage retenue, chacun des modules de convoyage peut être muni d'un tel rouleau conique motorisé (6) à chacune de ses extrémités de façon à faire suivre aux produits à transporter une trajectoire courbe.

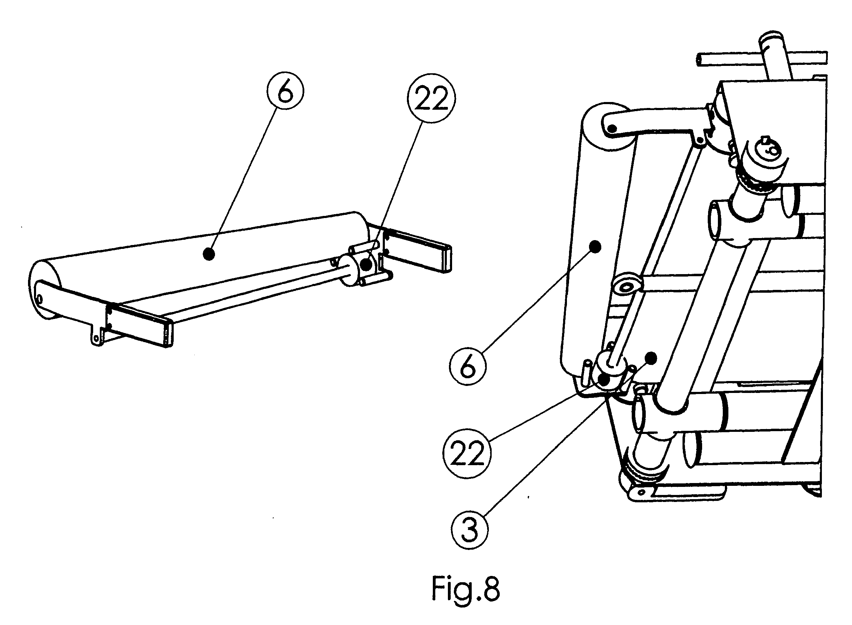

Ce rouleau conique (6) est motorisé par la bande transporteuse du convoyeur au moyen d'un contre galet (22) (figure 8). Chaque rouleau conique (6) est monté sur un support télescopique permettant de s'adapter aux différentes longueurs d'entrefers induites par la configuration de l'installation, partie droite vers autre partie droite, partie droite vers partie courbe, partie courbe vers partie courbe.

Par ailleurs, des rouleaux cylindriques motorisés peuvent être montés en lieu et place des rouleaux coniques lorsque l'utilisateur désire augmenter sensiblement la longueur du module de convoyage concerné.

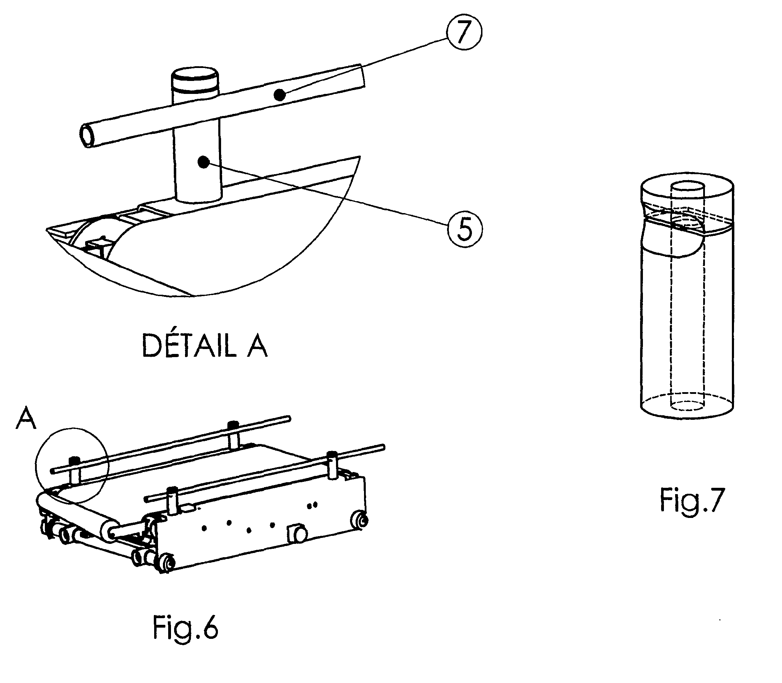

Le moyen de guidage (7) de la charge à transporter est de préférence du type rives de guidage, constituées d'un tube déformable en matière plastique ou autre, qui est fixé sur un support (5) (figure 7), réalisé de façon à éviter aux produits transportés de tomber à terre.

Ce dispositif de rive de guidage (7) se monte sur les différents convoyeurs motorisés (36) par fixation mécanique et/ou magnétique (5) et assure ainsi une continuité de guidage sur tout le cheminement de convoyage, selon toutes trajectoires multidirectionnelles (figure 7 et 8).

Les modules de convoyage peuvent être munis de roues blocables qui permettent un déplacement au sol facile et rapide. Ces roues se montent en extrémité des bipieds (18). Des sabots optionnels peuvent se monter autour de ces roues pour permettre le passage d'escaliers ou de changements de niveaux.

Un jeu de cellules photoélectriques (10) et de cartes électroniques de commande (21), embarqué sur le convoyeur (figure 2), peut permettre au système un fonctionnement d'accumulation sans pression.

Le chariot d'alimentation (14) (figure 3) comprend l'alimentation électrique (15) pouvant se connecter à n'importe quel module de convoyage (3), ainsi que de dispositifs permettant le support des différents accessoires des convoyeurs, soit au minimum :
- rives de guidage (7) à l'emplacement 33
- rouleaux coniques (6) à l'emplacement 39
- rouleaux cylindriques pour transfert droit à l'emplacement 34
- support de rives (5) et pièces de rechange de première urgence à l'emplacement 38
- ... .

Des roues (40) peuvent permettre un déplacement roulant du chariot (14). Les emplacements 37 peuvent être utilisés pour la reprise par chariot de type élévateur ou transpalette.

### Exemple de mise en oeuvre

Les modalités de mise en oeuvre du dispositif objet de la présente invention sont les suivantes : l'utilisateur prélève un à un les modules de convoyage du chariot d'alimentation (si ce dernier est utilisé, ce qui n'est pas obligatoire) et les dispose sur le sol à sa convenance.

Il procède aux réglages de hauteur et d'inclinaison (grâce aux deux poignées (19)) ou de trajectoire courbe en montant les rouleaux coniques de transfert (6).

Il connecte ensuite mécaniquement et électriquement entre eux les différents convoyeurs portables grâce au dispositifs (8) et (13).

Puis, il relie l'alimentation électrique (du chariot (14) ou déportée) à n'importe quel module de convoyage.

Enfin, il connecte le chariot au réseau électrique et appuie sur le bouton de mise en marche de l'alimentation électrique : les convoyeurs se mettent alors en fonctionnement selon la configuration du mode de fonctionnement de la carte de commande (21).

Le système peut fonctionner suivant plusieurs modes de fonctionnements différents :
- un mode de marche en accumulation sans pression,
- un mode de marche en transport simple.

Le changement des modes de fonctionnement peut se faire très simplement grâce à l'ajustement de cavaliers sur la carte de commande (21) de chaque module de convoyage.

La mise en oeuvre des divers éléments constitutifs donne à l'objet de la présente invention un maximum d'effets utiles qui n'avaient jamais été, à ce jour, obtenus par des dispositifs existants.

Il va de soi que l'invention n'est pas limitée à la forme de réalisation décrite ci-dessus à titre d'exemple mais qu'elle s'étend à toutes les formes de réalisations couvertes par les revendications ci-annexées.

## Revendications

1. Dispositif de convoyage de charges isolées comprenant un ensemble de modules de convoyage (3), **caractérisé en ce que** chacun des modules de convoyage (3) se compose d'un châssis (1), d'un convoyeur de manutention continue, de moyens (18) et (2) de réglage en hauteur et en inclinaison, et de moyens (8) et (13) de liaison mécanique et électrique permettant une liaison entre les différents modules de convoyaye (3) de manière à former un cheminement pouvant faire suivre aux charges transportées des trajectoires droites et/ou courbe avec des inclinaisons réglables.

2. Dispositif de convoyage de charges isolées selon la revendication 1, **caractérisé en ce qu'**il comprend un chariot (14) de support des modules de convoyage (3) et/ou d'alimentation électrique de ceux-ci.

3. Dispositif de convoyage de charges isolées selon la revendication 1 ou la revendication 2, **caractérisé en ce que** chaque module de convoyage (3) est équipé d'un moyen (6) de transfert entre modules des charges à transporter suivant une trajectoire courbe.

4. Dispositif de convoyage de charges isolées selon l'une des revendications 1 à 3, **caractérisé en ce que** chaque module de convoyage (3) est équipé d'un moyen (5, 7) de guidage des charges à transporter.

5. Dispositif de convoyage de charges isolées selon l'une des revendications 1 à 4, **caractérisé en ce que** le moyen de réglage en hauteur et en inclinaison est réalisé au moyen d'un système de bipieds (18) télescopiques et escamotables, comportant chacun un moyen de blocage angulaire et en hauteur dudit bipied (18).

6. Dispositif de convoyage de charges isolées selon la revendication 5 **caractérisé en ce que** le moyen de blocage angulaire et en hauteur de chaque bipied (18) est réalisé grâce à la combinaison, d'une part, d'une poignée excentrique (19), de quatre bagues dentées (20), d'un tirant horizontal (24), agencés de façon à bloquer angulairement les bipieds (18) par rapport au châssis (1), et, d'autre part, de deux cônes de commandes (23), de deux tirants verticaux (27), de quatre montants verticaux (30) et (41), de deux ressorts annulaires (29), agencés de façon à bloquer le mouvement de réglage en hauteur des bipieds (18).

7. Dispositif de convoyage de charges isolées selon l'une des revendications 1 à 6 **caractérisé en ce que** le moyen (2) de réglage supplémentaire en hauteur et en inclinaison est du type à simple ciseau.

8. Dispositif de convoyage de charges isolées selon l'une des revendications 1 à 7, **caractérisé en ce que** le moyen (8) permettant une liaison mécanique entre les différents modules de convoyage (3) comprend des moyens à allongement télescopique et à liaison à rotule, agencés de façon à pouvoir former entre les modules de convoyage un angle variable sur plusieurs plans.

9. Dispositif de convoyage de charges isolées selon la revendication 8 **caractérisé en ce que** les moyens à allongement télescopique sont ajustables sans outil, par une rotation de 90° de la rotule (42) ou de la chape (43) autour de leurs axes.

10. Dispositif de convoyage de charges isolées selon l'une des revendications 3 à 9, **caractérisé en ce que** le moyen (6) de transfert entre modules des charges à transporter comprend un rouleau conique (6), motorisé grâce à un contre galet (22) en appui sur la partie tournante du convoyeur, ledit rouleau conique (6) étant mis en oeuvre de façon à faire suivre aux produits à transporter une trajectoire courbe et étant monté sur un support télescopique permettant de s'adapter aux différentes longueurs d'entrefer induites par la configuration de l'installation : partie droite vers autre partie droite, partie droite vers partie courbe, partie courbe vers partie courbe.

11. Dispositif de convoyage de charges isolées selon l'une des revendications 4 à 10, **caractérisé en ce que** le moyen (7) de guidage des charges à transporter comprend des rives de guidage, constituées d'un tube déformable en matière plastique ou autre, fixé sur un support (5) mécanique ou magnétique, et agencé de façon à éviter aux produits transportés de tomber à terre.

12. Dispositif de convoyage de charges isolées selon l'une quelconque des revendications précédentes, **caractérisé en ce que** les moyens (8) et (13) de liaison mécanique et électrique sont montés sur des convoyeurs de manière à pouvoir retransmettre les signaux d'informations ainsi que la puissance électrique nécessaire à la connexion d'un autre module de convoyage (3) situé après un convoyeur classique, de façon à pouvoir insérer des convoyeurs classiques au sein d'un circuit constitué de modules de convoyage (3) objets de la présente invention.

13. Dispositif de convoyage de charges isolées selon l'une quelconque des revendications précédentes, **caractérisé en ce que** chaque module de convoyage (3) est conçu pour être portable et se mettre en place sans outil, par une personne seule.

## Claims

1. Device for conveying isolated loads comprising an assembly of conveying modules (3), **characterized in that** each of the conveying modules (3) is made up of a frame (1), a continuous handling conveyor, height and inclination adjusting means (18) and (2), and mechanical and electrical linking means (8) and (13) enabling the different conveying modules (3), to be linked so as to form a route capable of causing the transported loads to follow straight and/or curved trajectories with adjustable inclination.

2. Device for conveying isolated loads according to claim 1, **characterized in that** it comprises a support carriage (14) for the conveying modules (3) and/or electrical power for these modules (3).

3. Device for conveying isolated loads according to claim 1 or claim 2, **characterized in that** each conveying module (3) is provided with transfer means (6) between modules for transported loads following a curved trajectory.

4. Device for conveying isolated loads according to one of claims 1 to 3, **characterized in that** each conveying module (3) is provided with guide means (5, 7) for the transported loads.

5. Device for conveying isolated loads according to one of claims 1 to 4, **characterized in that** the height and inclination adjusting means are produced through a system of telescopic and retractable bipods (18), each comprising angular blocking means (18) at the top of said bipod.

6. Device for conveying isolated loads according to claim 5, **characterized in that** the angular blocking means at the top of each bipod (18) are produced through the combination, on one hand, of an eccentric handle (19), four toothed rings (20), a horizontal tie rod (24), all positioned so as to angularly block the bipods (18) relative to the frame (1), and, on the other hand, of two control cones (23), two vertical tie rods (27), four vertical posts (30) and (41), two ring springs (29), positioned so as to block the height adjusting movement of the bipods (18).

7. Device for conveying isolated loads according to one of claims 1 to 6 **characterized in that** the additional height and inclination adjusting means (2) are of the simple shear type.

8. Device for conveying isolated loads according to one of claims 1 to 7, **characterized in that** the means (8) enabling a mechanical link between the different conveying modules (3), comprises telescopic expansion means with a ball link, positioned so as to be able to form a conveyor angle between the modules which is variable on several planes.

9. Device for conveying isolated loads according to claim 8, **characterized in that** the telescopic expansion means are adjustable without tools, by a 90° rotation of the ball joint (42) or of the yoke (43) around their axes.

10. Device for conveying isolated loads according to one of claims 3 to 9, **characterized in that** the means (6) for transferring transported loads between modules comprise a tapered roller (6), motorized thanks to a counter-roller (22) bearing on the rotating part of the conveyor, said tapered roller (6) being implemented so as to cause the transported products to follow a curved trajectory and being assembled on a telescopic support allowing adaptation to the different gap lengths caused by the configuration of the installation: straight part towards another straight part, straight part towards curved part, curved part towards curved part.

11. Device for conveying isolated loads according to one of claims 4 to 10, **characterized in that** the means (7) for guiding the transported loads comprise guide edges, made up of a malleable tube in plastic or another material, fixed on a mechanical or magnetic support (5), and positioned so as to prevent the transported products from falling on the ground.

12. Device for conveying isolated loads according to any of the preceding claims, **characterized in that** the mechanical and electrical linking means (8) and (13) are mounted on conveyors so as to be able to retransmit information signals as well as the electrical power needed for the connection to another conveyor module (3) located after a traditional conveyor, so as to be able to insert traditional conveyors within a circuit made up of conveying modules (3) according to the present invention.

13. Device for conveying isolated loads according to any of the preceding claims, **characterized in that** each conveying module (3) is designed to be portable and to be set up without tools, by only one person.

## Patentansprüche

1. Vorrichtung zum Befördern einzelner Lasten, umfassend eine Anordnung von Beförderungsmodulen (3), **dadurch gekennzeichnet, dass** jedes der Beförderungsmodule (3) aus einem Rahmen (1), einem durchgehenden Verladeförderer, Mitteln (18) und (2) zum Einstellen der Höhe und Neigung und Mitteln (8) und (13) zum mechanischen und elektrischen Verbinden, die eine Verbindung zwischen den verschiedenen Beförderungsmodulen (3) ermöglichen, besteht, um eine Wegführung zu bilden, welche die transportierten Lasten dazu bringen kann, gerade und/oder gebogene Bahnen mit einstellbaren Neigungen zu verfolgen.

2. Vorrichtung zum Befördern einzelner Lasten nach Anspruch 1, **dadurch gekennzeichnet, dass** sie einen Wagen (14) zum Tragen der Beförderungsmodule (3) und/oder um diese mit Strom zu versorgen umfasst.

3. Vorrichtung zum Befördern einzelner Lasten nach Anspruch 1 oder 2, **dadurch gekennzeichnet, dass** jedes Beförderungsmodul (3) mit einem Mittel (6) versehen ist, um die zu transportierenden Lasten zwischen den Modulen entlang einer gebogenen Bahn zu übertragen.

4. Vorrichtung zum Befördern einzelner Lasten nach einem der Ansprüche 1 bis 3, **dadurch gekennzeichnet, dass** jedes Beförderungsmodul (3) mit einem Mittel (5, 7) zum Führen der zu transportierenden Lasten versehen ist.

5. Vorrichtung zum Befördern einzelner Lasten nach einem der Ansprüche 1 bis 4, **dadurch gekennzeichnet, dass** das Mittel zum Einstellen der Höhe und Neigung mittels eines Systems aus ausziehbaren und einklappbaren Zweibeinen (18) ausgebildet ist, die jeweils ein Mittel umfassen, um das Zweibein (18) in Winkel und Höhe zu blockieren.

6. Vorrichtung zum Befördern einzelner Lasten nach Anspruch 5, **dadurch gekennzeichnet, dass** das Mittel, um jedes Zweibein (18) in Winkel und Höhe zu blockieren, durch die Kombination einerseits aus einem exzentrischen Griff (19), vier Zahnringen (20), einer waagerechten Zugstange (24), die angeordnet sind, um die Zweibeine (18) im Verhältnis zum Rahmen (1) zu blockieren, und andererseits aus zwei Steuerkegeln (23), zwei senkrechten Zugstangen (27), vier senkrechten Ständern (30) und (41), zwei ringförmigen Federn (29), die angeordnet sind, um die Bewegung zur Höheneinstellung der Zweibeine (18) zu blockieren, ausgebildet ist.

7. Vorrichtung zum Befördern einzelner Lasten nach einem der Ansprüche 1 bis 6, **dadurch gekennzeichnet, dass** das Mittel (2) zum weiteren Einstellen der Höhe und Neigung von der Art einer einfachen Schere ist.

8. Vorrichtung zum Befördern einzelner Lasten nach einem der Ansprüche 1 bis 7, **dadurch gekennzeichnet, dass** das Mittel (8), das eine mechanische Verbindung zwischen den verschiedenen Beförderungsmodulen (3) ermöglicht, Mittel mit ausziehbarer Verlängerung und mit Kugelgelenkverbindung umfasst, die angeordnet sind, um zwischen den Beförderungsmodulen einen auf mehreren Ebenen variablen Winkel zu bilden.

9. Vorrichtung zum Befördern einzelner Lasten nach Anspruch 8, **dadurch gekennzeichnet, dass** die Mittel mit ausziehbarer Verlängerung ohne Hilfsmittel durch eine Drehung von 90° des Kugelgelenks (42) oder des Gabelkopfs (43) um ihre Achsen verstellbar sind.

10. Vorrichtung zum Befördern einzelner Lasten nach einem der Ansprüche 3 bis 9, **dadurch gekennzeichnet, dass** das Mittel (6) zum Übertragen der zu transportierenden Lasten zwischen den Modulen eine konische Rolle (6) umfasst, die über eine kleine Gegenrolle (22), die sich auf den drehenden Teil des Förderers abstützt, motorisiert ist, wobei die konische Rolle (6) eingesetzt wird, um die zu transportierenden Produkte dazu zu bringen, eine gebogene Bahn zu verfolgen, und dabei auf einem ausziehbaren Halter angebracht ist, der es ermöglicht, sich den verschiedenen Zwischenraumlängen anzupassen, die durch die Konfiguration der Einrichtung herbeigeführt werden: gerader Teil zu anderem geradem Teil, gerader Teil zu gebogenem Teil, gebogener Teil zu gebogenem Teil.

11. Vorrichtung zum Befördern einzelner Lasten nach einem der Ansprüche 4 bis 10, **dadurch gekennzeichnet, dass** das Mittel (7) zum Führen der zu transportierenden Lasten Führungsleisten umfasst, die aus einer verformbaren Plastikröhre oder dergleichen bestehen, die auf einem mechanischen oder magnetischen Halter (5) befestigt ist und angeordnet ist, um zu vermeiden, dass die transportierten Produkte auf den Boden fallen.

12. Vorrichtung zum Befördern einzelner Lasten nach einem der vorhergehenden Ansprüche, **dadurch gekennzeichnet, dass** die Mittel (8) und (13) zum mechanischen und elektrischen Verbinden an den Förderern angeordnet sind, um die Informationssignale sowie die notwendige elektrische Leistung für den Anschluss eines anderen Beförderungsmoduls (3), das sich nach einem herkömmlichen Förderer befindet, weiterleiten zu können, um herkömmliche Förderer innerhalb eines Kreislaufs aus Beförderungsmodulen (3) der vorliegenden Erfindung einfügen zu können.

13. Vorrichtung zum Befördern einzelner Lasten nach einem der vorhergehenden Ansprüche, **dadurch gekennzeichnet, dass** jedes Beförderungsmodul (3) ausgelegt ist, um tragbar zu sein und ohne Hilfsmittel von einer einzigen Person eingesetzt werden zu können.
